# EUROPÄISCHE PATENTANMELDUNG

(11) **EP 4 179 869 A1**
(43) Veröffentlichungstag der Anmeldung: **17.05.2023**
(21) Anmeldenummer: 22206440.4
(22) Anmeldetag: 09.11.2022
(51) Int. Cl.: A01G 7/00, A01G 25/16

(54) **VERFAHREN ZUR WASSERSTATUSBESTIMMUNG VON PFLANZEN**

(30) Priorität: 15.11.2021 DE 102021129742
(71) Anmelder: Beuth Hochschule Für Technik Berlin, 13353 Berlin (DE); Bormann, Dirk, 01734 Rabenau OT Lübau (DE); Innotas Produktions GmbH, 02763 Zittau (DE)
(72) Erfinder: Richter, Markus, 48329 Havixbeck (DE); Rojek, Lukasz, 12679 Berlin (DE); Bischoff-Schaefer, Monika, 14612 Falkensee (DE); Bormann, Dirk, 01734 Rabenau OT Lübau (DE); Heiland, Klaus-Dieter, 15754 Heidesee (DE); Möller, Matthias, 79199 Kirchzarten (DE)
(74) Vertreter: Holz, Christian

(57) **Zusammenfassung**

Die vorliegende Erfindung betrifft Verfahren zur Wasserstatusbestimmung von Pflanzen (31) mit wenigstens den Schritten:
• Erfassen (300) von Bilddaten (LWIR) wenigstens einer Pflanze (31) mittels einer Wärmebildkamera (11a),
• Erfassen (310) einer Umgebungstemperatur der Pflanze (31) und
• Bestimmen (350) des CWSI (Crop-Water-Stress-Index) der Pflanze (31) basierend auf den erfassten Bilddaten (LWIR) der Wärmebildkamera (11a) und auf der erfassten Umgebungstemperatur, und/oder
• Erfassen (400) von Bilddaten (SWIR) wenigstens der Pflanze (31) mittels einer Kurzwelleninfrarotkamera (11b) und
• Bestimmen (450) des WI (Water-Index) der Pflanze (31) basierend auf den erfassten Bilddaten (SWIR) der Kurzwelleninfrarotkamera (11b),
• ferner Bestimmen (600) des Wasserstatus der Pflanze (31) basierend auf dem CWSI der Pflanze (31) und/oder auf dem WI der Pflanze (31).

## Beschreibung

Die vorliegende Erfindung betrifft ein Verfahren zur Wasserstatusbestimmung von Pflanzen gemäß dem Patentanspruch 1 sowie ein System zur Durchführung eines derartigen Verfahrens gemäß dem Patentanspruch 10.

Wasser gehört zu den essentiellen Ressourcen bei der Produktion von beispielsweise Obst, Gemüse, Zierpflanzen und anderen gartenbaulichen Produkten. Wachstum und Ertrag sowie Qualität und Gesunderhaltung von Pflanzen stehen in direktem Zusammenhang mit der Wasserverfügbarkeit.

Um Nutzpflanzen entsprechend ihrem aktuellen Wasserbedarf optimal zu bewässern, wäre der Wasserversorgungszustand permanent zu bestimmen, so dass die Zufuhr von Wasser genau auf den aktuellen Bedarf der Nutzpflanze abgestimmt werden kann. Die Wasserzufuhr könnte dann beispielsweise seitens einer automatischen Bewässerungsanlage bzw. dessen Steuerungseinheit bedarfsgeregelt erfolgen.

Bislang erfolgt jedoch eine derartige Bewässerungsansteuerung in der Praxis lediglich gesteuert, wobei der aktuelle Wasserbedarf der Nutzpflanze zumeist aufgrund subjektiver Entscheidungen einer Person unter Berücksichtigung von Lichtsummenberechnungen oder punktuellen Messungen des Wassergehalts im Substrat oder Boden bestimmt wird. Eine nichtdestruktive Bestimmung des Wasserversorgungszustands anhand der Reaktionen der Pflanzen erfolgt nicht.

Flächige Auswertungen der Bestandstemperaturen und der Reflexion von Strahlung in definierten Spektralbereichen können bei der Bewertung des Wasserversorgungszustands der Nutzpflanzen helfen. Dies kann mit Hilfe von digitalen IR-Kamerasensoren geschehen, die permanent Bilddaten aufzeichnen, zeitnah auswerten und analysieren.

Auch werden an Forschungsinstitutionen Methoden eingesetzt, welche die Nachteile der Bodenfeuchtemessung kompensieren sollen. Dabei handelt es sich um zum Teil aufwändige und teure Methoden. Andere Methoden befinden sich noch in der Testphase. Das Pflanzengewebe kann zum Beispiel mit Hilfe einer Drucksonde untersucht werden, bei der die Blattdicke in Relation zum Wassergehalt der Zellen gesetzt wird (D. ZIMMERMANN, R. REUSS, M. WESTHOFF, P. GEßNER, W. BAUER, E. BAMBERG, F.-W. BENTRUP und U. ZIMMERMANN (2008): A novel, non-invasive, online monitoring, versatile and easy plant-based probe for measuring leaf water status. Journal of Experimental Botany, 59, 11, 3157-3167). Eine andere Methode misst akustische Signale im Xylem, sogenannte Kavitationen, die Rückschluss auf den Wasserfluss innerhalb der Pflanze geben (SCHMID, E.-A. (2010): Ultraschallemissionen als Wasserstress-Signale an gärtnerischen Kulturpflanzen. Dissertation an der Justus-Liebig-Universität Gießen, Gießen). Den Wasserzustand anhand der Pflanzenphysiologie zu bestimmen, erscheint bei Betrachtung dieser und anderer Methoden als sinnvolle Alternative zur Bodenfeuchtemessung.

Wassermenge und Irrigationszeitpunkt müssen objektiv festgelegt werden, da ein kontinuierliches Wasserangebot von verschiedenen Faktoren beeinflusst und eine limitierte Wasserversorgung als Pflanzenstress angesehen wird (P.-J. PASCHOLD, J. KLEBER und N. MAYER (2002): Geisenheimer Bewässerungssteuerung 2002. Zeitschrift für Bewässerungswirtschaft 37, 1,5-15). Wenn Stresssymptome wie das Welken der Blätter oder Verbrennungserscheinungen auftreten, weiß die Person zwar, dass die Wasserversorgung eingeschränkt war und der Zeitpunkt des Gießens gekommen ist, allerdings ist fast immer vor dem Auftreten dieser Symptome bereits Stress vorhanden und somit sind negative Auswirkungen auf Pflanzen- und Ertragsqualität oder möglicherweise eine Verlängerung des Kulturzeitraums bereits gegeben. Auch ist Pflanzenstress nicht immer sofort für das menschliche Auge sichtbar und verlangt daher objektive sensorische Ermittlungsverfahren, welche die genannten relevanten Einflussfaktoren überprüfen können, um daraus Zeitpunkt und Menge der Irrigation berechnen zu können.

Als sehr aussagekräftiges Indiz für mangelnde Wasserversorgung gilt die Leitfähigkeit der Stomata, da der Leitfähigkeitswert in direktem Bezug zum Wasserpotential der Luft steht (L. GUILIONI, H. G. JONES, I. LEINONEN und J. P. LHOMME (2008): On the relationships between stomatal resistance and leaf temperatures in thermography. Agric. Forest Meteorol., 148, 1908-1912). In der Forschung wird dies, mit viel Arbeitsaufwand, mit Hilfe von Porometern bereits sehr genau bestimmt, ohne dabei dem Anspruch einer möglichen Automatisierung gerecht zu werden.

Zerstörungsfreie Messverfahren basieren auf unterschiedlichen physikalischen Prinzipien. Eine ganze Reihe an Verfahren zur Bestimmung des Irrigationszeitpunktes auf der Basis von Blatt- und Bestandsoberflächentemperaturen wie der SSD-Index, d. h. der Stress-Degree-Day-Index (S. B. IDSO, R. D. JACKSON, P. J. PINTER JR., R. J. REGINATO und J. L. HATFIELD (1981): Normalizing the stress-degree-day parameter for environmental variability. Agricultural Meteorology, 24, 45-55), der CTV-Index, d. h. der Critical-Temperature-Variability-Index (BLAD, B. L., B. R. GARDNER, D. G. WATTS und N. J. ROSENBERG (1981): Remote sensing of crop moisture status. Remote Sensing, 3, 4-20; CLAWSON, K. L. und B. L. BLAD (1982): Infrared thermometry for scheduling irrigation of corn. Agron. J., 74, 311-316), der TSD-Index, d. h. der Temperature-Stress-Day-Index (B. R. GARDNER, B. L. BLAD, D. P. GARRITY und D. G. WATTS (1981): Relationships between crop temperature, grain yield, evapotranspiration and phonological development in two hybrids of moisture stressed sorghum. Irrigation Science, 2, 213-224) und der CWSI, d. h. der Crop-Water-Stress-Index (R. D. JACKSON (1988): A reexamination of the crop water stress index. Irrigation Science, 9, 309-317), basiert auf der Messung der Blatt- und Bestandsoberflächentemperatur mittels Infrarotsensoren oder -Kameras (M. GOVENDER, P. J. DYE, I. M. WEIERSBYE, E. T. F. WITKOWSKI und F. AHMED (2009): Review of commonly used remote sensing and ground-based technologies to measure plant water stress. Water SA, 35, 5, 741-752).

Der CWSI nimmt dabei die größte Bedeutung in der Literatur ein. Er basiert auf der Tatsache, dass die Differenz zwischen Bestands- und Lufttemperatur ansteigt, wenn Pflanzen unter Wasserstress stehen, d.h. die Versorgung der Nutzpflanze mit Wasser ungenügend ist, da die Transpirationsrate als Kühlmechanismus am Blatt abnimmt. Für die Bestimmung des CWSI benötigt man zudem minimale und maximale Temperaturen, die das Blatt unter den gegebenen Mikroklimabedingungen bei voller Öffnung der Stomata beziehungsweise bei komplett geschlossenen Stomata einnimmt.

Abgesehen von empirischen Möglichkeiten, diese Minimum- und Maximum-Temperaturen für einen bestimmten Standort und für gewisse Bedingungen zu bestimmen, besteht die Möglichkeit einer theoretischen Kalkulation, wozu allerdings Messwerte des aerodynamischen Widerstands, der stomatären Leitfähigkeit und der Strahlungsbilanz benötigt werden, die mit größerem experimentellen Aufwand erhoben werden müssen oder nur geschätzt werden können. Aufgrund der Abhängigkeit des CWSI von den externen Einflussgrößen und der unterschiedlichen Reaktionen von Pflanzen auf diese Bedingungen findet der CWSI, obwohl von der Theorie her positiv beurteilt, kaum Anwendung zur Irrigationssteuerung in Nutzpflanzenkulturen (J. O. PAYERO und S. IRMAK (2006): Variable upper and lower crop water stress index baselines for corn and soybean. Irrigation Science, 25, 21-35.).

Die Messung des aktuellen Temperaturunterschieds von Blatt und Luft erweist sich, dank der Entwicklung moderner Infrarotthermometer, nicht als Hindernis in der Berechnung des CWSI. Was allerdings Schwierigkeiten mit sich bringt, ist die Ermittlung der genannten Grenzen, innerhalb derer die Senkung oder Erhöhung der Blatttemperatur möglich ist. Die Temperaturgrenzwerte müssen für jeden Standort, für jede Klimasituation und aufgrund genetischer Unterschiede und darauf basierenden unterschiedlichen Überlebensstrategien für jede Pflanzenart und möglicherweise für bestimmte Sorten individuell bestimmt werden.

Die zerstörungsfreie und berührungslose Wassergehaltsbestimmung an Unterglas-Kulturen unterliegt zum Teil anderen Einflussgrößen als im Freiland. Neben den Unterschieden in der Bereitstellung der Wasserversorgung sind es vor allem die Parameter des Mikro- und Strahlungsklimas, die einen Einfluss auf den Wasserverbrauch und -bedarf der Nutzpflanzen aufweisen. Insbesondere die Strahlungsbilanz der kurz- und langwelligen Wärmestrahlung wird durch Bauteile des Gewächshauses, wie das Grundgerüst, das Eindeckungs- und Schirmmaterial sowie Antriebe im Dachraum, das Heizungssystem und die Inneneinrichtung maßgeblich beeinflusst.

Ein weiteres in der Literatur viel diskutiertes Verfahren ist die Möglichkeit, über Reflexions- und Absorptionsmessungen unter Anwendung verschiedener Wellenlängen im sichtbaren sowie nahen und mittleren Infrarotbereich den Wassergehalt von Einzelblättern und Pflanzenbeständen berührungslos aus pflanzennahen bis hin zu extraterrestrischen Entfernungen zu bestimmen. Grundlage für dieses Verfahren ist die Absorption von Wasser in unterschiedlichen Wellenlängenbereichen. Diese weist insbesondere in den Bereichen 970 nm, 1.200 nm, 1.450 nm, 1.950 nm und 2.250 nm Maxima auf. Verschiedene Indices wurden abgeleitet, die zumeist auf Reflexionsmessungen in den Bereichen höherer Absorption im Vergleich zur Reflexion von Wellenlängen, die geringer absorbiert werden, basieren. Hierzu gehören beispielsweise der WI, d. h. der Water-Index (J. PENUELAS, J. PINOL, R. OGAYA und I. FILELLA (1997): Estimation of plant water concentration by the reflectance Water Index WI (R900/R970). Int. J. Remote Sensing, 18, 13, 2869-2875), der NDVI, d. h. der Normalized-Difference-Vegetation-Index (J. W. ROUSE, R. H. HASS, J. A. SCHELL; D. W. DEERING und J. C. HARLAN (1974): Monitoring the vernal advancement of retrogradation of natural vegetation. Final report, NASA/GSFC, Greenbelt), der SIPI, d. h. der Structure-Independent-Pigment-Index (J. PENUELAS, F. BARET und I. FILELLA (1995): Semi empirical indices to assess carotenoids/chlorophyll a ratio from leaf spectral reflectance. Photosynthetica, 31, 221-230) sowie der fWBI, d. h. der Floating-Position-Water-Band-Index (I. B. STRACHAN, E. PATTEY und J. B. BOISVERT (2002): Impace of nitrogen and environmental conditions on corn as detected by hyperspectral reflectance. Remote Sensing of Environment 80, 2, 213-224).

Weitere Messverfahren, die in der internationalen Forschung geprüft werden, basieren auf Sensoren, die mit Terahertz- und Mikrowellentechnologie über die Absorption des Wassers Rückschlüsse auf den Wassergehalt ziehen wollen, auf Ultraschall- sowie auf Kernspinresonanztechniken. Allerdings müssen im Rahmen dieser Projekte erst einmal Geräte entwickelt werden, die für den Zweck der Wassergehaltsbestimmung an Pflanzen geeignet sind (S. NESTLER (2012): Überblick über Verfahren zur berührungslosen Messung des Wasserstatus von Pflanzen. Bachelor-Arbeit an der Beuth Hochschule für Technik Berlin, Berlin), so dass diese Verfahren bisher nicht umsetzbar sind.

Eine präzise Irrigationsteuerung muss Klima und Witterung der Pflanzenumgebung sowie die genetische Diversität der Nutz- und Zierpflanzen und den Wasserzustand des Bodens beachten. Voraussetzung für den Einsatz einer modernen Irrigationssteuerung ist das Wissen darüber, wie eine Pflanze auf Veränderungen im Wasserangebot reagiert (P.-J. PASCHOLD, J. KLEBER und N. MAYER (2002): Geisenheimer Bewässerungssteuerung 2002. Zeitschrift für Bewässerungswirtschaft 37, 1,5-15). Die Bodenfeuchtemessung gehört zu den am häufigsten in der Praxis eingesetzten Methoden der Irrigationssteuerung. Dabei finden Tensiometer häufig den Einsatz. In einer Rangliste (H. G. JONES und P. SCHOFIELD (2008): Thermal and other remote sensing of plant stress. Gen. Appl. Plant Physiology, 34, 1-2, 19-32) steht diese Methode nur kurz hinter der Irrigation nach Intuition, Erfahrung und Kalender.

Andere Methoden basieren auf der Ermittlung der Bodenfeuchtebilanz und pflanzenbasierten Messungen. Es findet sich als Beispiel für die Feuchtebilanz die rechnerische Herangehensweise der Geisenheimer-Methode (P.-J. PASCHOLD, J. KLEBER und N. MAYER (2002): Geisenheimer Bewässerungssteuerung 2002. Zeitschrift für Bewässerungswirtschaft 37, 1,5-15). Hierbei wird aus Verdunstungsrate, das heißt aus klimatischer Wasserbilanz und der Praxiserfahrung des Gärtners der Irrigationsbedarf einer Kultur ermittelt. Zudem spielen noch Lichtsummenkalkulation oder einfache Zeitsteuerung eine Rolle in den Betrieben.

Da Nutzpflanzen sehr unterschiedlich auf Wassermangel oder -überschuss reagieren können und Folgen für die Wachstums- und Ertragsleistung sowie die Qualität bei sehr unterschiedlichen Wasserzuständen in den Pflanzen auftreten, sollte der Irrigationsbedarf vorzugsweise mit Hilfe von Zustandsgrößen, die an der Pflanze ermittelt werden können, bestimmt werden. Die Möglichkeiten dazu sind beschränkt, zumal Verfahren wie die Wasserpotentialbestimmung über die Scholanderbombe oder gravimetrische Verfahren destruktiv und somit für eine kontinuierliche Bestimmung des Wasserbedarfs in einer Kultur nicht geeignet sind.

Das DE 20 2017 003 667 U1 beschreibt die Nutzung einer Drohne zur Bewässerung in geschlossenen Räumen. An der Drohne ist ein Wassertank über eine Haltevorrichtung befestigt. Der Wassertank besitzt einen Öffnen- und Schließen-Mechanismus am Boden, welcher das Auffüllen des Tanks über beliebig gestaltete bzw. geformte Wasserreservoirs erlaubt. Der Öffnen- und Schließen-Mechanismus kann elektronisch über eine Software angesteuert werden. Die Wassertank-Haltevorrichtung der Drohne beinhaltet einen Kipp-Mechanismus, der es erlaubt, das Wasser an der Bewässerungsstelle abzuliefern, da diese Stelle nicht immer senkrecht von oben angeflogen werden kann. Diese Kippvorrichtung kann ebenfalls elektronisch über die Software angesteuert werden. Die Drohne ist mit Sensoren zur Aufnahme von 3-dimensionalen Positionen ausgestattet, die es erlauben sowohl statische Positionen als auch Flugrouten zu speichern. Die Drohne ist mit Abstandsmess-Sensoren zur Feststellung von Hindernissen und Abständen ausgestattet, welche es erlauben, Ausweichmanöver und Routen in geschlossenen Räumen zu fliegen. Die Drohne kann mittels der Sensoren selbstständig zu einer Drohnen-Ladestation fliegen sowie die Bewässerungsstellen und Wasserreservoirs eigenständig finden. Eine Bestimmung des Wasserbedarfs der Pflanzen findet hier seitens der Drohne bzw. mittels dessen Sensoren nicht statt; diese sind auch gar nicht in der Lage, hierzu geeignete Informationen zu erfassen.

Eine Aufgabe der vorliegenden Erfindung ist es, die Möglichkeiten zur Bewässerung von Pflanzen zu verbessern. Hierzu soll insbesondere der aktuelle Wasserbedarf bzw. der aktuelle Wasserstatus der Pflanzen berücksichtigt werden. Zumindest soll eine Alternative zu bekannten derartigen Möglichkeiten geschaffen werden.

Die Aufgabe wird erfindungsgemäß durch ein Verfahren mit den Merkmalen des Patentanspruchs 1 sowie durch ein System mit den Merkmalen des Patentanspruchs 10 gelöst. Vorteilhafte Weiterbildungen sind in den Unteransprüchen beschrieben.

Somit betrifft die vorliegende Erfindung ein Verfahren zur Wasserstatusbestimmung von Pflanzen mit wenigstens den Schritten:
- Erfassen von Bilddaten wenigstens einer Pflanze mittels einer Wärmebildkamera,
- Erfassen einer Umgebungstemperatur der Pflanze und
- Bestimmen des CWSI (Crop-Water-Stress-Index) der Pflanze basierend auf den erfassten Bilddaten der Wärmebildkamera und auf der erfassten Umgebungstemperatur und bzw. oder
- Erfassen von Bilddaten wenigstens der Pflanze mittels einer Kurzwelleninfrarotkamera und
- Bestimmen des WI (Water-Index) der Pflanze basierend auf den erfassten Bilddaten der Kurzwelleninfrarotkamera,
- ferner Bestimmen des Wasserstatus der Pflanze basierend auf dem CWSI der Pflanze und bzw. oder auf dem WI der Pflanze.

Der vorliegenden Erfindung liegt dabei die Erkenntnis zugrunde, dass sich sowohl über den CWSI als auch über den WI der aktuelle Wasserstatus einer Pflanze grundsätzlich verlässlich bestimmen lässt. Somit können diese Indices alternativ verwendet werden, um den aktuellen Wasserstatus einer konkreten Pflanze, dessen entsprechende Informationen wie zuvor beschrieben sensorisch erfasst werden, automatisch zu bestimmen. In Abhängigkeit des bestimmten aktuellen Wasserstatus der Pflanze kann dann insbesondere eine bedarfsgerechte Bewässerung erfolgen.

Dabei kann erfindungsgemäß sowohl einer der beiden Indices alleinig bestimmt und verwendet werden, wie zuvor beschrieben. Es können jedoch auch beide Indices parallel bestimmt und in Kombination miteinander verwendet werden, indem die jeweiligen Messergebnisse gegenüber einander verifiziert und bzw. oder miteinander kombiniert werden, beispielsweise durch eine logische UND-Verknüpfung. Dies kann die Genauigkeit bzw. die Verlässlichkeit des bestimmten Wasserstatus der Pflanze erhöhen.

Gemäß einem weiteren Aspekt der Erfindung weist das Verfahren ferner den Schritt auf:
- Erfassen einer Strahlungstemperatur der unmittelbaren Umgebung der Pflanze,
wobei das Bestimmen des CWSI (Crop-Water-Stress-Index) der Pflanze ferner basierend auf der erfassten Strahlungstemperatur dessen unmittelbarer Umgebung erfolgt.

Auf diese Art und Weise kann auch die Strahlungstemperatur der unmittelbaren Umgebung der Pflanze als Umgebungsparameter berücksichtigt werden, was die Genauigkeit des Bestimmens des CWSI erhöhen kann. Unter der unmittelbaren Umgebung der Pflanze ist dessen Nahbereich zu verstehen, dessen Strahlungstemperatur der Pflanze zugeordnet werden kann bzw. als repräsentativ für die Pflanze angesehen werden kann. Diese Strahlungstemperatur kann dann in die Berechnungen der Grenzwerte eingehen.

Die Strahlungstemperatur der unmittelbaren Umgebung der Pflanze kann mittels eines entsprechenden Messmittels sensorisch erfasst bzw. gemessen werden. Als ein derartiges Messmittel kann ein Temperatursensor in einer schwarzen Hohlkugel verwendet werden, um den Einfluss der Strahlung auf die Erwärmung eines schwarzen Körpers zu messen. Die Strahlungstemperatur der unmittelbaren Umgebung der Pflanze kann ebenfalls aus den Bilddaten der Wärmebildkamera bestimmt werden.

Gemäß einem weiteren Aspekt der Erfindung weist das Verfahren ferner den Schritt auf:
- Erfassen einer Feuchttemperatur der Luft in unmittelbarer Umgebung der Pflanze,
wobei das Bestimmen des CWSI (Crop-Water-Stress-Index) der Pflanze ferner basierend auf der erfassten Feuchttemperatur erfolgt.

Auf diese Art und Weise kann auch die Feuchttemperatur als Umgebungsparameter berücksichtigt werden, was die Genauigkeit des Bestimmens des CWSI erhöhen kann. Die Feuchttemperatur kann mit einem entsprechenden Messmittel, z. B. einem Psychrometer, bestimmt werden.

Gemäß einem weiteren Aspekt der Erfindung weist das Verfahren ferner den Schritt auf:
- Erfassen einer Windgeschwindigkeit der Luft in unmittelbarer Umgebung der Pflanze,
wobei das Bestimmen des CWSI (Crop-Water-Stress-Index) der Pflanze ferner basierend auf der erfassten Windgeschwindigkeit erfolgt

Auf diese Art und Weise kann auch die Windgeschwindigkeit als Umgebungsparameter berücksichtigt werden, was die Genauigkeit des Bestimmens des CWSI erhöhen kann. Die Windgeschwindigkeit kann mittels eines entsprechenden Messmittels bestimmt werden.

Hierbei kann auch eine Bildmaske über die erkannte Pflanze bzw. um die erkannte Pflanze herum gelegt werden, um die erkannte Pflanze auszuschneiden und somit lediglich den Bildausschnitt mit der erkannten Pflanze weiter zu verarbeiten.

Gemäß einem weiteren Aspekt der Erfindung erfolgt ein Bestimmen des CWSI der Pflanze und ein Bestimmen des WI der Pflanze, und das Verfahren weist ferner den Schritt auf:
- Verifizieren des Wasserstatus der Pflanze basierend auf dem CWSI der Pflanze und auf dem WI der Pflanze,
wobei das Bestimmen des Wasserstatus der Pflanze basierend auf dem CWSI der Pflanze und auf dem WI der Pflanze erfolgt. Dies kann die Umsetzung der kombinierten Verwendung der beiden Indices wie zuvor beschrieben ermöglichen.

Gemäß einem weiteren Aspekt der Erfindung weist das Verfahren ferner wenigstens die Schritte auf:
- Erfassen von Bilddaten wenigstens der Pflanze mittels einer Bild-/Nahinfrarotkamera und
- Erkennen wenigstens der Pflanze, vorzugsweise basierend auf dem bestimmten NDVI (Normalized-Difference-Vegetation-Index) wenigstens der Pflanze, in den erfassten Bilddaten der Bild-/Nahinfrarotkamera,
wobei das Erfassen von Bilddaten wenigstens der Pflanze mittels der Wärmebildkamera und bzw. oder das Erfassen von Bilddaten wenigstens der Pflanze mittels der Kurzwelleninfrarotkamera für die erkannte Pflanze der Bilddaten der Bild-/Nahinfrarotkamera erfolgt. Auf diese Art und Weise kann eine Erkennung von Pflanzen innerhalb der sensorisch erfassten Bilddaten erfolgen, sodass die zuvor beschriebenen Indices für die zuvor erkannte Pflanze innerhalb der Bilddaten bestimmt werden können.

Gemäß einem weiteren Aspekt der Erfindung weist das Verfahren wenigstens den Schritt auf:
- Bewässern wenigstens der Pflanze in Abhängigkeit ihres bestimmten Wasserstatus.

Dies kann die Benutzung des bestimmten Wasserstatus einer Pflanze zu dessen bedarfsgerechter Bewässerung ermöglichen.

Gemäß einem weiteren Aspekt der Erfindung weist das Verfahren wenigstens den Schritt auf:
- Positionieren der Wärmebildkamera und bzw. oder der Kurzwelleninfrarotkamera, vorzugsweise und der Bild-/Nahinfrarotkamera, zum Erfassen der Bilddaten wenigstens der Pflanze, und
- Zuordnen des bestimmten Wasserstatus zu der Position der Pflanze.

Dies kann es ermöglichen, den bestimmten Wasserstatus einer Position bzw. der Position der entsprechenden Pflanze zuzuordnen und somit die Information positionsbezogen zu verwenden.

Gemäß einem weiteren Aspekt der Erfindung weist das Verfahren wenigstens den Schritt auf:
- Ausgeben des Wasserstatus wenigstens der Pflanze, vorzugsweise an einen Benutzer.

Dies kann es ermöglichen, den bestimmten Wasserstatus einer Person mitzuteilen und insbesondere optisch anzuzeigen.

Die Erfindung betrifft auch ein System zur Durchführung eines Verfahrens wie zuvor beschrieben mit einem optischen Sensorsystem mit wenigstens einer Wärmebildkamera, welche ausgebildet ist, Bilddaten wenigstens einer Pflanze zu erfassen, und bzw. oder mit einer Kurzwelleninfrarotkamera, welche ausgebildet ist, Bilddaten wenigstens der Pflanze zu erfassen, vorzugsweise ferner mit einer Bild-/Nahinfrarotkamera, welche ausgebildet ist, Bilddaten wenigstens der Pflanze zu erfassen, mit einem Datenverarbeitungssystem, welches ausgebildet ist, eine Umgebungstemperatur der Pflanze, vorzugsweise ferner eine Strahlungstemperatur der unmittelbaren Umgebung der Pflanze, eine Feuchttemperatur der Luft in unmittelbarer Umgebung der Pflanze und bzw. oder eine Windgeschwindigkeit der Luft in unmittelbarer Umgebung der Pflanze, zu erfassen, und mit einer Steuerungseinheit, welche ausgebildet ist, den CWSI (Crop-Water-Stress-Index) der Pflanze basierend auf den erfassten Bilddaten der Wärmebildkamera und auf den erfassten Umgebungstemperaturen zu bestimmen, und bzw. oder den WI ( Water-Index) der Pflanze basierend auf den erfassten Bilddaten der Kurzwelleninfrarotkamera zu bestimmen, und ferner den Wasserstatus der Pflanze basierend auf dem CWSI der Pflanze und bzw. oder auf dem WI der Pflanze zu bestimmen. Hierdurch kann ein System geschaffen werden, das zuvor beschriebene erfindungsgemäße Verfahren umzusetzen und dessen Vorteile und Eigenschaften zu nutzen.

Gemäß einem Aspekt der Erfindung weist das System eine bewegliche Trägervorrichtung auf, welche das optische Sensorsystem aufweist und ausgebildet ist, sich gegenüber der Pflanze zu positionieren. Dies kann es ermöglichen, dass eine selbsttätige Ausrichtung des optischen Sensorsystems seitens der beweglichen Trägervorrichtung gegenüber der jeweiligen Pflanze erfolgen kann.

Gemäß einem weiteren Aspekt der Erfindung ist die bewegliche Trägervorrichtung als geführte Trägervorrichtung, vorzugsweise als schienengeführte Trägervorrichtung, ausgebildet. Eine derartige Führung der beweglichen Trägervorrichtung kann beispielsweise innerhalb eines Gewächshauses oder einer vergleichbaren Anordnung von Pflanzen verwendet werden, da die feste Anordnung der Führung gegenüber festen Bereichen zum Pflanzenanbau vorgegeben werden kann. Dies kann die Führung bzw. die Bewegbarkeit der beweglichen Trägervorrichtung mit vergleichsweise einfachen, kostengünstigen und standardisierbaren Elementen ermöglichen.

Gemäß einem weiteren Aspekt der Erfindung ist die bewegliche Trägervorrichtung als unbemanntes Fahrzeug, vorzugsweise als unbemanntes Luftfahrzeug, ausgebildet. Dies kann die Flexibilität der Bewegungen erhöhen, welche die bewegliche Trägervorrichtung ausführen kann. Eine derartige Bewegbarkeit kann insbesondere die Umsetzung auf freien Flächen ermöglichen. Dabei ein unbemanntes Luftfahrzeug, insbesondere eine Drohne, zu verwenden, kann zusätzliche Freiheiten in der Bewegbarkeit der beweglichen Trägervorrichtung schaffen.

Mit anderen Worten kann es ein Ziel der vorliegenden Erfindung sein, mit einem photogrammetrischen Multi-Sensor-Messsystem Zustandsgrößen der Pflanzen, wie Wasserversorgung berührungslos, ferngesteuert zu überwachen und entsprechende Handlungsbefehle an automatische Applikationssysteme beziehungsweise Informationen an die Anwender weiterzugeben. Das Multisensorsystem kann dabei auf Kamerasystemen basieren, die Wellenlängenbereiche von 380 nm bis 2.500 nm in der Nahbereichsphotogrammetrie abdecken können. Die Informationen zu den Zustandsgrößen der Nutzpflanzen können dabei aus den Reflexions- und Emissionseigenschaften für elektromagnetische Strahlung, aus den Wärmebilddaten und dem NDVI abgeleitet werden.

Der vorliegenden Erfindung liegt dabei die Erkenntnis zugrunde, dass Wasser, eine Grundvoraussetzung für Pflanzenwachstum und hohe Erträge, im kurzwelligen und mittleren Infrarotspektrum absorbiert.

Erfindungsgemäß kann ein Verfahren und eine entsprechende photogrammetrische Aufnahmeapparatur für die automatisierte Bestimmung des Versorgungszustandes von Pflanzen geschaffen werden. Dabei können die optischen Kamerasensoren mit einem multisensorischen Positionierungssystem auf einer beweglichen Trägerplattform zusammengestellt werden, um anhand einer zeitnahen Bilddatenauswertung und präzisen Georeferenzierung die Bewässerung der Nutzpflanzen orts- und bedarfsgerecht anzusteuern. Es kann daher ein Ziel der Erfindung sein, Kulturpflanzen im Freiland und im geschützten Anbau anhand der Spektralauswertung der Bilddaten und der georeferenzierten Position präzise bewässern zu können.

Im Laufe der letzten Jahre hat die ressourcenschonende Verwendung von Wasser in gartenbaulichen Produktionssystemen zunehmend an Bedeutung gewonnen. Es kann problematisch sein, in größeren Produktionsbetrieben ganze Bestände zu überwachen und bedarfsgerecht zu wässern. Die Vorgehensweise, punktuell mit Bodenfühlern Messungen des Wassergehalts im Boden durchzuführen, ist nicht besonders effektiv, denn auf größeren Flächen gibt es immer trockene und feuchte Zonen.

Erfindungsgemäß kann daher ein automatisiertes und ggfs. netzwerkbasiertes Multi-Sensor-Messsystem zur bedarfs- und zielgerechten Bewässerung von Nutzpflanzen im geschützten Anbau und im Freilandanbau geschaffen werden. Hierzu kann das erfindungsgemäße Verfahren bzw. das erfindungsgemäße System auf der Analyse der Bilder von, vorzugsweise drei, unterschiedlichen miteinander gekoppelten Kamerasystemen basieren. Mit Hilfe der Bilddaten können Indexwerte zur Bestimmung des Wasserhaushalts von Pflanzen ermittelt werden. Um aus den Bildpunkten die Punkte herauszufiltern, die den gewünschten Informationsgehalt liefern, können nicht nur alle Hintergrundbildpunkte verworfen, sondern auch mit Hilfe eines Sortieralgorithmus alle Extremwerte herausgefiltert werden. Diese Verfahrensschritte können die Grundlage für die weitere Datenverarbeitung darstellen.

Es kann, alleinig oder in Kombination, der temperaturbasierte Crop Water Stress Index zur Auswertung verwendet und vorzugsweise mit dem Water Index, der den Quotienten der Reflexionsintensität zwischen einer kaum vom Wasserstatus beeinflussten Wellenlänge aus dem Bereich 900 nm bis 1.100 nm oder um 1.300 nm und der Wellenlänge um 1.450 nm, deren Reflexion direkt vom Wasserstatus der Pflanzen abhängt, kombiniert werden.

Hierzu kann ein mathematisches Modell zur Bestimmung der Temperaturgrenzwerte für die Ermittlung des CWSI mit Hilfe von Messwerten der Lufttemperatur, der Feuchttemperatur, der Strahlungswärme und der Windgeschwindigkeit verwendet werden. Bislang können diese Grenzwerte nur unter Berücksichtigung von Schätzwerten berechnet werden, so dass der CWSI in der Praxis keine Verbreitung finden konnte. Dies kann erfindungsgemäß überwunden werden.

In Bezug auf den WI kann eine Kalibrierung der SWIR-Kamera mit Hilfe eines Reflexionsstandards erfolgen. Dieser Vorgang kann automatisiert erfolgen, indem das Messsystem indoor an verschiedenen Positionen an einem Reflexionsstandard vorbei geführt wird und im Außenbereich eine Kalibrierung während der Datenübergabe auf der Landestation der beweglichen Trägervorrichtung, insbesondere als UAV, stattfindet.

Die Kombination von CWSI und WI, um eine Bestätigung der Analyseergebnisse der Messverfahren und zur gegenseitigen Kontrolle mit dem jeweils anderen zu erhalten, kann besonders vorteilhaft sein. Dazu kann es vorteilhaft sein zu erkennen, wann eines der beiden Messverfahren keine verwertbaren Ergebnisse liefert. Für diesen Zweck kann ein automatisierter Bewertungsalgorithmus in der Auswertungssoftware verwendet werden.

Das erfindungsgemäße System zur Durchführung des erfindungsgemäßen Verfahrens kann seine Monitoring-Aufgaben weitestgehend selbstständig durchführen. Aufgabe des Systems kann es auch sein, alle Bilddaten georeferenziert an einen Server weiterzugeben. Mit Hilfe der Georeferenzierung werden die Bilddaten der bereits ermittelten Position zugeordnet. Die Georeferenzierung als Positionsbestimmung kann vorteilhaft sein, da damit das Bewässerungssystem angesprochen - auf Grundlage der Bildanalyse und der Berechnung der Indices - und die Bewässerung bedarfs- und ortspezifisch durchgeführt werden kann. Zur Positionsbestimmung können Sensoren mit RTK-GNSS (Real Time Kinematik - Global Navigation Satellite System) und bzw. oder UWB (Ultra Wide Band) eingesetzt werden, die eine bis auf 1 cm genaue Positionsbestimmung ermöglichen können.

Die Innovation des erfindungsgemäßen Verfahrens und des entsprechenden erfindungsgemäßen Systems kann insbesondere in der Verwendung und Zusammenstellung moderner Technologien zur Bild-und Positionsaufnahme mittels verschiedener optischer und mechanischer Sensoren gesehen werden. Das erfindungsgemäße Pflanzen-Monitoring-System kann drei Hauptbestandteile zur Datenerfassung (Messeinheit), zur Prozessierung (Server) und webbasierte Applikationen zum Plotten und Bildwiedergabe (End-Gerät, zum Beispiel ein Laptop) aufweisen.

Das optische Sensorsystem kann, als photogrammetrische Aufnahmeapparatur, vorzugsweise eine Kombination von Nahinfrarot-, Thermalbild- und Kurzwelleninfrarot-Kameras aufweisen. Im Gegensatz zu üblichen Kontaktfühlern können die optischen Sensoren auf beweglichen Trägersystemen untergebracht werden, wodurch eine flächige, berührungslose und zerstörungsfreie Messung möglich sein kann. Das integrierte multisensorale Positionierungssystem kann eine präzise Georeferenzierung der Bilddaten ermöglichen. Die Steuerung der Messeinheit und die Echtzeitübertragung der Messdaten zum Server können automatisch erfolgen. Die Messergebnisse können in einer vordefinierten Datenbankstruktur gespeichert und mittels moderner Web-Technologien visualisiert werden. Schließlich kann gemäß dem ermittelten Wasserbedarf eine ressourcenschonende, orts- und bedarfsgerechte Bewässerung der Kulturpflanzen stattfinden.

Die Zielflächenerkennung, d. h. die zu betrachtende Pflanze, kann mittels einer kostengünstigen Einzelchip-Farbkamera mit entferntem Infrarotfilter erfolgen. Der Bildsensor kann die Strahlung im sichtbaren Lichtbereich (380 nm bis 750 nm) und im nahen Infrarot (bis 900 nm) registrieren (VNIR-Bilddaten), welche demzufolge zur Ermittlung des Normalized Difference Vegetation Index (NDVI) verwendet werden kann. Der NDVI bezieht sich auf Reflexionsdifferenzen zwischen nahem Infrarot und rotem bzw. blauem, sichtbarem Bereich. Es werden photosynthetische Aktivitäten der Pflanzen widergespiegelt. Bewegen sich die NDVI-Werte im positiven Bereich, kann davon ausgegangen werden, dass die vom Bildsensor erfasste bzw. aufgenommene Fläche photosynthetisch aktiv ist und daher eine Zielfläche (Pflanze) darstellt. Nach Analyse des gesamten erfassten bzw. aufgenommenen Bildes kann der Pflanzenumriss auf das Kurzwelleninfrarotbild und auf das Wärmebild übertragen werden, um den auszuwertenden Bildbereich herauszuheben und die irrelevanten Bildinformationen auszuschließen.

Mit einer Wärmebildkamera können radiometrisch Oberflächentemperaturen des Pflanzenbestands berührungsfrei gemessen werden, sodass eine Aussage über die Blatttemperaturen getroffen werden kann. Die Wärmebildkamera kann Strahlung im langwelligen Bereich zwischen 7,5 µm und 13,5 µm erfassen (LWIR-Bilddaten) und mit einem 9 mm Standardobjektiv ausgestattet sein. Die absoluten Messwerte des Mikrobolometer-Sensors sowie die vordefinierten Planck'sche Konstanten der Wärmebildkamera können in den Metadaten des Bildes verschlüsselt werden. Das Sensorsignal kann unter Berücksichtigung der kalibrierten Planck'schen Kamerakonstante und der zusätzlichen Einflussgrößen wie Emissionsgrad (ε) des Zielobjektes, Transmission der Atmosphäre (τ) und die Umgebungstemperatur, vorzugsweise in Temperaturwerte pro Pixel, umgerechnet werden. Diese Berechnung kann beispielsweise nach Minkina, W, und S. Dudzik (2009): Infrared Thermography, John Wiley & Sons, ISBN: 9780470682241, erfolgen.

Die Bestandstemperaturen können verwendet werden, um den sogenannten Crop Water Stress Index (CWSI) zu berechnen. Dieser basiert auf der Einordnung der aktuellen Bestandstemperatur zwischen zwei Temperaturgrenzwerten, die in Abhängigkeit der aktuellen Umgebungsbedingungen unterschiedliche Werte annehmen können. Die aktuelle Bestandstemperatur ist unter Lichtbedingungen von der Transpiration der Blätter abhängig. Ist der Wasserversorgungszustand gut, kann die Pflanze intensiv transpirieren und die Blatttemperaturen sinken zum Teil unter die Umgebungstemperatur. Schränkt der Wasserversorgungszustand die Transpiration ein, steigt die Blatttemperatur in Abhängigkeit von der Strahlungsbilanz über die Umgebungstemperatur an. Die Grenzwerte für die Bestandstemperatur stellen daher die Temperaturen für einen vollständig transpirierenden Bestand und einen nicht mehr transpirierenden Bestand dar. Der CWSI kann nur Werte zwischen 0 und 1 annehmen. Je näher der Wert gegen 1 tendiert, umso niedriger ist der Wasserversorgungszustand des Pflanzenbestandes. Der Grenzwert, ab dem eine Bewässerung stattfinden muss, kann zuvor pflanzenspezifisch im Labor mit Hilfe von Gaswechselanalysen zur Bestimmung der stomatären Leitfähigkeit und Transpiration ermittelt werden. Die Bestimmung der Temperaturgrenzwerte kann auf der Basis einer Modellberechnung unter Einbeziehung von Umgebungsparametern erfolgen.

Eine kurzwellige Infrarot-Kamera kann mittels vorgeschalteter Bandpassfilter die reflektierte Strahlung im Bereich von 1.300 nm und 1.450 nm (SWIR-Bilddaten) erfassen bzw. messen. Der Bereich um 1.450 nm kann für die Messung vorteilhaft sein, da das Wasser in den Pflanzenzellen Strahlung um 1.450 nm absorbiert. In Abhängigkeit vom Wasserversorgungszustand kann daher mehr oder weniger Strahlung im Bereich von 1.450 nm reflektiert werden. Die Reflexion im Spektralbereich um 1.300 nm ist dagegen nur gering vom Wassergehalt des Pflanzengewebes abhängig, sondern resultiert aus der strukturellen Zusammensetzung des Blattes und kann daher unter gegebenen Bedingungen über einen kurzen Zeitraum als annähernd konstant angesehen werden. Die Reflexion in beiden Wellenlängenbereichen kann dabei immer im Verhältnis zu einem Reflexionsstandard ermittelt werden. Aus beiden Reflexionswerten kann ein Quotient gebildet werden, der eine Aussage über den Wasserversorgungszustand ermöglichen kann. Der Grenzwert für diesen Quotienten, ab dem der Wasserversorgungszustand kritische Werte annimmt und in der Folge zum Beispiel ein Schließen der Stomata der Nutzpflanzen nach sich zieht, kann über Gaswechselmessungen zur Bestimmung der stomatären Leitfähigkeit unter Laborbedingungen definiert werden.

Eine präzise Orts- und Lagebestimmung der erfindungsgemäßen photogrammetrischen Apparatur kann für eine ressourcenschonende automatisierte Bewässerung vorteilhaft sein. Die Information über die aktuelle Position des Messsystems zum Zeitpunkt der Bildaufnahme kann es ermöglichen, die Pflanzen entsprechend dem ermittelten Wasserbedarf zielgerecht zu bewässern.

Der Server als Steuerungseinheit eines erfindungsgemäßen Systems kann ein fundamentaler Teil des gesamten Überwachungssystems sein, welcher die jeweiligen Dienstprozesse zur Nachrichtenübertragung, Datenspeicherung, -auswertung und -visualisierung bereitstellen kann. Dort kann eine Sicherung der erfassten Bilddaten sowie eine zeitnahe Prozessierung und Verarbeitung der Bilddaten erfolgen. Die Auswertungsergebnisse können anschließend in einer Datenbank als Datenspeicher gespeichert werden. Eine interaktive Darstellung der Messdaten kann durch die Anwendung der modernen Web-Technologien erfolgen.

Als bewegliche Trägervorrichtung bzw. als beweglichen Trägerplattform des erfindungsgemäßen Systems kann eine Aufnahmeapparatur verwendet werden, welche mit ihrer Messeinheit an einem Einschienen-System in einem Gewächshaus direkt über der Pflanzenkultur montiert sein kann. Die Aufnahme des Pflanzenbestands kann im Sekundentakt aus kurzer Distanz von ca. 1 Meter senkrecht zur Fahrtrichtung der Aufnahmeapparatur erfolgen. Ein Schrittmotor kann die Aufnahmeapparatur mit einer konstanten Schrittgeschwindigkeit zwischen den Pflanzenreihen fortbewegen, so dass die Trägerplattform während der Messung nicht anhalten muss.

Diese Aufnahmestrecke kann jeweils am Start- und Endpunkt mit einem NFC-Marker versehen sein, an dem die Lage- und Fahrtrichtungswechsel stattfinden können. Ein zusätzlicher Schrittmotor kann die horizontale Orientierung der photogrammetrischen Apparatur, d. h. des optischen Sensorsystemes, um 180° ermöglichen. Somit können die Pflanzen bei der Hin- und Rückfahrt jeweils von einer Seite aufgenommen werden. Um den Auswertungsprozess zu verbessern, können die Bilddaten direkt nach der Aufnahme bereits im Messsystem vorab analysiert und direkt zum Server übertragen werden. Die Messeinheit kann von jedem Endgerät, wie beispielsweise Laptop, Tablet oder Mobiltelefon bzw. Smartphone, überwacht und gesteuert werden.

Somit kann erfindungsgemäß die Erfassung der Bild- und Positionsdaten mittels der photogrammetrischen Apparatur des erfindungsgemäßen Systems stattfinden. Im Gegensatz zu bisherigen Verfahren kann hierdurch die Datenerhebung an den Pflanzen berührungslos und zerstörungsfrei erfolgen. Die Kameramodule und die Geosensoren können von getrennten Systemprozessen der Messeinheit automatisch gesteuert werden. Die atmosphärischen Bedingungen, wie z. B. die Luftfeuchtigkeit und die Lufttemperatur, können von der Wetterstation während der Bildaufnahme gemessen und in einer vordefinierten Datenbankstruktur mit einem Zeitstempel auf dem Server gespeichert werden. Diese Informationen können für die Spektralauswertung der Thermalbilddaten nützlich sein, damit die Sensorsignale in die Temperaturwerte korrekt umgewandelt werden können. Hier kann für größere Aufnahmedistanzen im Besonderen die störende Einwirkung der atmosphärischen Transmission und der Hintergrundobjekte zu berücksichtigen sein. Darüber hinaus können anhand der atmosphärischen Messdaten die beiden Grenzwerte der feuchten Temperatur und der trockenen Temperatur für die Bestimmung des Wasserstressindexes ermittelt werden.

Die Bildaufnahmeapparatur kann eine Kombination von drei Kamerasystemen aufweisen, wie zuvor bereits beschrieben. Dies kann den Vorteil bieten, dass Systemausfälle vermieden und sich die Systeme hinsichtlich der Bewertung des Wasserversorgungszustands ergänzen können. Zudem kann die Bewertung des Wasserversorgungszustands mit Hilfe der Bestandstemperatur- und Reflexionsmessung auf unterschiedlichen Messprinzipien basieren, so dass sie sich nicht gegenseitig beeinflussen können, aber zur gegenseitigen Kontrolle geeignet sein können. Dieses kann umso wichtiger sein, als dass ein einzelnes Verfahren durch unvorhersehbare Einflussgrößen beeinflusst werden und damit unter Umständen falsche Signale ausgeben könnte. Dass dieser Fehler bei zwei unabhängigen Messverfahren auftritt, wäre erheblich unwahrscheinlicher.

Das erfindungsgemäße Verfahren sowie das entsprechende erfindungsgemäße System können universell einsetzbar sein, d. h. sowohl im Unterglasanbau als auch im Freiland. Im geschützten Anbau kann das Messsystem, welches in einem stabilen, wassergeschützten Metall-Gehäuse verbaut sein kann, an einem Schienensystem über dem Pflanzenbestand installiert werden. Das Messsystem, d. h. das optische Sensorsystem, selbst kann mit einem Schrittmotor angetrieben und per Computer gesteuert werde.

Im Freiland kann das System modular aufgebaut sein, das Metallgehäuse kann entfallen, ebenso der Schrittmotor. Mittels einer Befestigung können die Messkomponenten, kompakt, platz- und gewichtssparend, an einem unbemannten Fahrzeug wie beispielsweise an einem UAV (unmanned air vehicle) wie an einer Drohne befestigt werden, um damit über die Pflanzenbestände fliegen und den Wasserversorgungszustand ermitteln zu können. Eine Landeplattform mit einer automatischen Akku-Wechselvorrichtung kann hierbei am Feld eingerichtet sein, sodass ein reibungsfreier Ablauf der Messungen, mit entsprechend ausreichender Stromversorgung, gewährleistet werden kann.

Die Digitalisierung kann somit die Chance bieten, schonender und effizienter mit begrenzten Ressourcen wie Wasser umzugehen. Das erfindungsgemäße Verfahren sowie das entsprechende erfindungsgemäße System können Gartenbau und Geoinformatik verbinden, um ein intelligentes, pflanzenbasiertes und kameragestütztes Überwachungssystem zu schaffen. Die bewegliche Trägervorrichtung des Systems kann sich autonom durch die Kulturen bewegen bzw. fahren, den ganzen Bestand photogrammetrisch erfassen und für die trockenen Bereiche bei Bedarf ortsgerecht die Bewässerung auslösen. Hierfür kann die Kombination von Nahinfrarot-, Wärmebild- und Kurzwelleninfrarot-Kameras zur Ermittlung des Wasserversorgungszustands von Pflanzen verwendet werden. Der Wasserversorgungszustand kann vorzugsweise mit zwei verschiedenen Verfahren parallel bestimmt bzw. gemessen werden, die sich gegenseitig ergänzen und kontrollieren können. Der Benutzer kann den aktuellen Stand der Messung jederzeit über die Monitoring-Software kontrollieren. Das System kann zukünftig dabei helfen, den Wasserverbrauch in Pflanzenbaubetrieben zu senken und den Anbau deutlich effizienter zu gestalten.

Das erfindungsgemäße Verfahren sowie das entsprechende erfindungsgemäße System können ein innovatives Monitoring und Steuerungssystem zur berührungslosen, nicht destruktiven Ermittlung des Wasserversorgungszustandes großer Pflanzenbestände ermöglichen. Die Kombination aus Wärmebild und kurzwelligen Infrarotbildern kann die Ermittlung des CWSI und WI ermöglichen. Es können zwei voneinander unabhängige Indices zur Bestimmung des Wasserversorgungszustands verwendet werden, so dass diese sich gegenseitig unterstützen können, da Situationen und Umstände auftreten können, in denen der eine oder andere Index kein zufriedenstellendes Ergebnis liefert. Die Datenübertragung kann sowohl im Unterglasanbau als auch im Freiland möglich sein.

Der Anschluss des erfindungsgemäßen Systems an ein autonomes Bewässerungssystem kann den Pflanzenproduzenten die Möglichkeit bieten, die Pflanzenbestände kontinuierlich zu überwachen und automatisiert Bewässerungsvorgänge ausführen zu lassen, um die Wasserversorgung der Nutzpflanzen zu optimieren und damit eine Grundvoraussetzung für gutes Wachstum zu schaffen. Da alle Bildaufnahmen und die daraus sich ergebenen Analysen georeferenziert erfolgen können, kann für einen gegebenen Pflanzenbestand eine digitale Karte erstellt werden, die an ein Bewässerungssystem übergeben werden kann. Das Bewässerungssystem kann dann, automatisch angesteuert, einzelne Bereiche des Pflanzenbestands bedarfsgerecht bewässern.

Auf diese Weise kann nicht nur Wasser eingespart, sondern auch Überbewässerung (Staunässe) an Stellen im Bestand mit ausreichender Wasserverfügbarkeit vermieden werden. Eine bedarfsgerechte Bewässerung, die bereits dann erfolgt, wenn ein Pflanzenbestand unter ansonsten guten Umgebungsbedingungen beginnt, seine Transpiration und in der Folge auch die Assimilation durch Schließen der Stomata einzustellen, sowie die Vermeidung von Staunässe, die sich direkt auf die Wurzelgesundheit der Nutzpflanzen auswirkt, können Erträge und die Qualität der Produkte verbessern bzw. sichern.

Somit kann erfindungsgemäß eine Erhöhung der Erträge im ökologischen aber auch konventionellen Gemüsebau durch Präzisionsirrigation von Freiland- und Unterglaskulturen aufgrund Vermeidung von Ertragsausfällen durch bedarfsgerechte Wasserversorgung erfolgen. Ziele im ökologischen Gemüsebau sind die Annäherung der Erträge an den konventionellen Anbau sowie eine Erhöhung der Konkurrenzfähigkeit regionaler Produzenten gegenüber Importprodukten; dies kann ebenfalls erfindungsgemäß unterstützt werden. Des Weiteren kann eine nachhaltige Reduzierung des Wasser- und Flächenverbrauchs bezogen auf die produzierten Mengen begünstigt werden.

Die Umsetzung kann in Branchen des Gartenbaus, aber auch in der Landwirtschaft erfolgen. Auch kann die Umsetzung im Zierpflanzenbau, im Baumschulbereich und im Obstanbau erfolgen. Eine weitere Umsetzungsmöglichkeit kann im urbanen Bereich einschließlich der Innenraumbegrünung mit der vielfältigen Verwendung von Pflanzen in den Grünflächen und repräsentativen Gebäuden liegen.

Ein Ausführungsbeispiel und weitere Vorteile der Erfindung werden nachstehend im Zusammenhang mit den folgenden Figuren rein schematisch dargestellt und näher erläutert. Darin zeigt:
- Figur 1: eine schematische Darstellung eines erfindungsgemäßen Systems mit einem Gewächshaus als Pflanzanlage;
- Figur 2: eine schematische Darstellung eines erfindungsgemäßen Systems mit einer Pflanzanlage im Freiland;

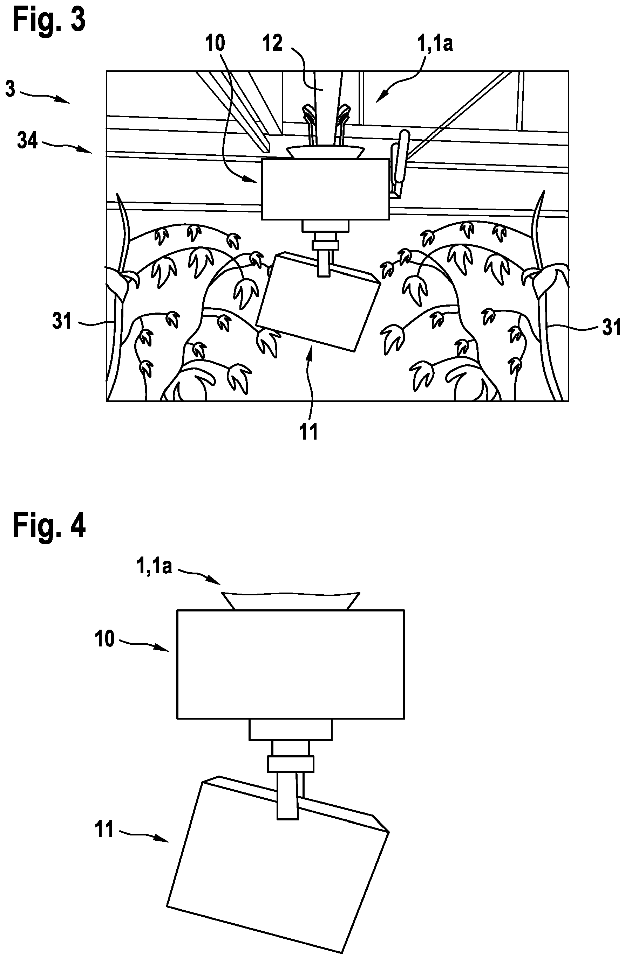

- Figur 3: eine perspektivische Darstellung einer beweglichen Trägervorrichtung des Systems in einem Gewächshaus;
- Figur 4: eine einzelne perspektivische Darstellung der beweglichen Trägervorrichtung der Figur 3;

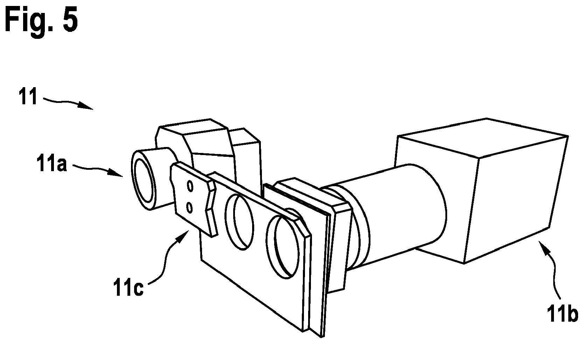

- Figur 5: eine perspektivische Darstellung eines optischen Sensorsystems der beweglichen Trägervorrichtung der Figur 3; und

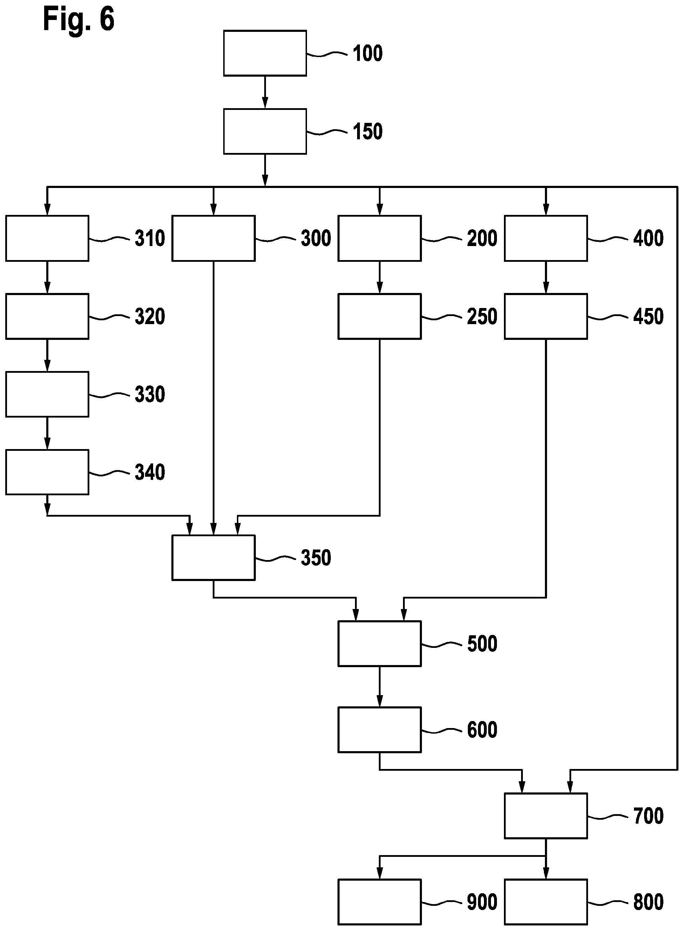

- Figur 6: ein Ablaufdiagramm eines erfindungsgemäßen Verfahrens.

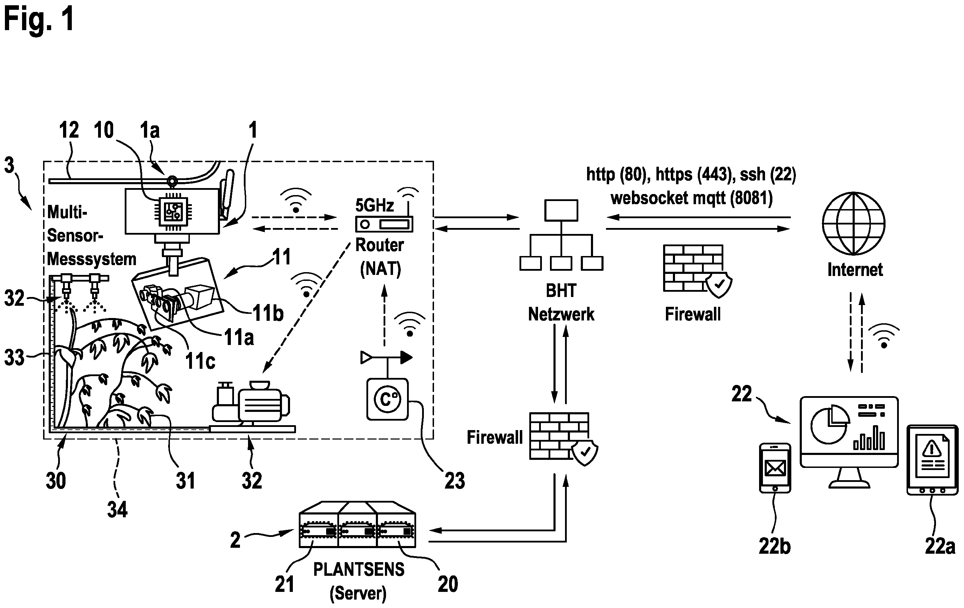

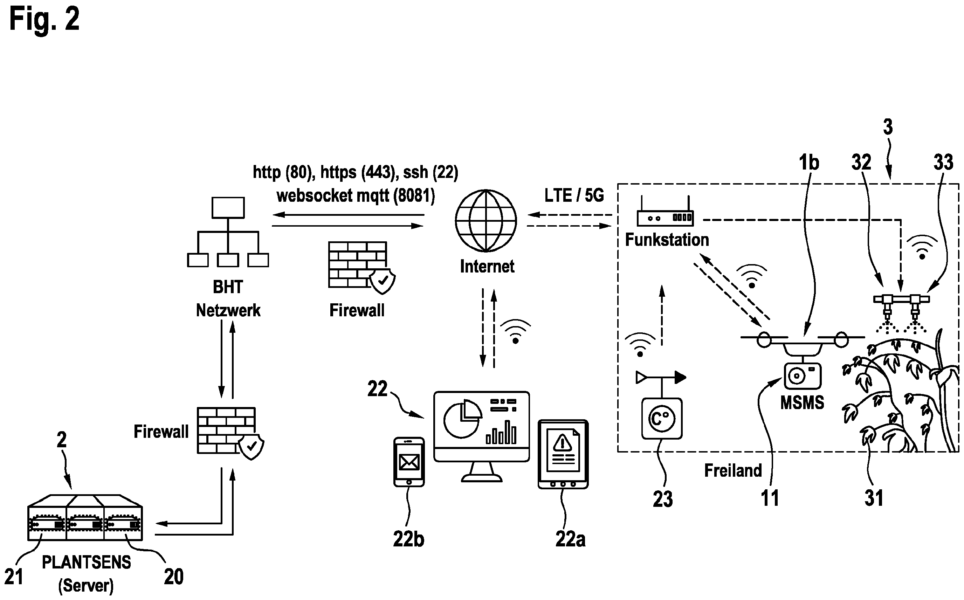

Ein erfindungsgemäßes System zur Durchführung eines erfindungsgemäßen Verfahrens weist eine bewegliche Trägervorrichtung 1 auf, welche auch als multisensorales Positionierungssystem 1 bezeichnet werden kann. Die bewegliche Trägervorrichtung 1 kann dabei insbesondere als geführte Trägervorrichtung 1a und insbesondere als schienengeführte Trägervorrichtung 1a ausgebildet sein, um innerhalb eines Gewächshauses 34 einer Pflanzanlage 3, siehe Figur 1, an einer Laufschiene 12 verfahrbar verwendet zu werden. Alternativ kann die bewegliche Trägervorrichtung 1 auch als unbemanntes Fahrzeug 1b und insbesondere als unbemanntes Luftfahrzeug 1b bzw. als Drohne 1b für eine Pflanzanlage 3 im Freiland verwendet werden, siehe Figur 2.

In jedem Fall weist die bewegliche Trägervorrichtung 1 eine Steuerungseinheit 10 auf, welche Schritte des erfindungsgemäßen Verfahrens ausführen kann. Die Steuerungseinheit 10 kann die IMU (Inital-Measuring-Modul) der beweglichen Trägervorrichtung 1 sowohl als schienengeführte Trägervorrichtung 1a als auch als Drohne 1b sein. Die bewegliche Trägervorrichtung 1 weist ferner ein optisches Sensorsystem 11 auf, welches gegenüber der Steuerungseinheit 10 zumindest um die Hochachse und vorzugsweise ferner um wenigstens eine horizontale Achse mittels eines entsprechenden Antriebs bewegt bzw. gedreht werden kann. Das optische Sensorsystem 11 weist eine Wärmebildkamera 11a zum Erfassen von Bilddaten des langweiligen Infrarots (LWIR), eine Kurzwelleninfrarotkamera 11b zum Erfassen von Bilddaten des kurzwelligen Infrarots (SWIR) sowie eine Bild-/Nahinfrarotkamera 11c zum Erfassen von Bilddaten der visuellen Bilderfassung und des nahen Infrarots (VNIR) auf, welche zueinander feststehend angeordnet sind und gemeinsam ausgerichtet werden können.

Zum erfindungsgemäßen System gehört ferner ein Datenverarbeitungssystem 2 mit einer Steuerungseinheit 20, welches Schritte des erfindungsgemäßen Verfahrens ausführen und auch ein Server 20 sein kann, mit einem Datenspeicher 21 in Form einer Datenbank 21, welche Daten und insbesondere Ergebnisse des erfindungsgemäßen Verfahrens speichern kann, wenigstens ein mobiles Endgerät 22 beispielsweise in Form eines Tablets 22a oder eines Smartphones 22b, welches Daten und insbesondere Ergebnisse des erfindungsgemäßen Verfahrens einem Benutzer anzeigen und bzw. oder Eingaben und insbesondere Anweisungen des Benutzers erhalten kann, sowie eine Wetterstation 23, welche wenigstens eine Umgebungstemperatur der Pflanzanlage 3 erfassen und zur Verfügung stellen kann. Die einzelnen Elemente des erfindungsgemäßen Systems können dabei mittels drahtgebundener Datenübertragungen V oder mittels drahtloser Datenübertragungen W Informationen untereinander austauschen.

Mittels des erfindungsgemäßen Systems kann der Wasserstatus von Pflanzen 31 im Boden 30 einer Pflanzanlage 3 sowohl als Gewächshaus 34 als auch als Anbau im Freiland bestimmt und in Abhängigkeit des bestimmten Wasserstatus der Pflanzen 31 die Bewässerung der einzelnen Pflanzen 31 über eine Bewässerungsleitung 33 einer Bewässerungsvorrichtung 32 reguliert werden, um jeder Pflanze 31 eine möglichst optimale Bewässerung zuteil werden zu lassen. Dies kann den Ertrag hinsichtlich Quantität und Qualität verbessern sowie gleichzeitig einen möglichst sparsamen Einsatz der wertvollen Ressourcen Wasser ermöglichen.

Mittels des erfindungsgemäßen Systems kann nun ein erfindungsgemäßes Verfahren zur Wasserstatusbestimmung der einzelnen Pflanzen 31 wie folgt erfolgen:
Zunächst kann an der Startposition des Verfahrens die Orientierung der Wärmebildkamera 11a, der Kurzwelleninfrarotkamera 11b und der Bild-/Nahinfrarotkamera 11c zueinander ermittelt werden, was in Form von Transformationsparametern erfolgen kann. Dann kann ein Positionieren 100 des optischen Sensorsystems 11 gegenüber der zu analysierenden Pflanze 31 erfolgen, indem die bewegliche Trägervorrichtung 1 zur Pflanze 31 hin bewegt wird. Mittels der geführten Trägervorrichtung 1a kann dies durch Verfahren entlang der Laufschiene 12 erfolgen. Als unbemanntes Luftfahrzeug 1b kann dies durch Heranfliegen an die Pflanze 31 erfolgen. Ferner kann ein Ausrichten 150 des optischen Sensorsystems 11 auf die Pflanze 31 erfolgen. In jedem Fall kann die Position, aus der die anschließenden Verfahrensschritte zur Analyse der Pflanze 31 erfolgen, bestimmt werden, um später die Messwerte bzw. das Analyseergebnis der Position bzw. der Pflanze 31 zuordnen zu können.

Nun kann ein Erfassen 200 von Bilddaten VNIR der Pflanze 31 mittels der Bild-/Nahinfrarotkamera 11c des optischen Sensorsystems 10 erfolgen. Seitens der Steuerungseinheit 10 der beweglichen Trägervorrichtung 1 kann nun ein Erkennen 250 der Pflanze 31 basierend auf dem bestimmten NDVI (Normalized-Difference-Vegetation-Index) in den erfassten Bilddaten VNIR der Bild-/Nahinfrarotkamera 11c erfolgen.

Parallel kann ein Erfassen 300 von Bilddaten LWIR der Pflanze 31 mittels der Wärmebildkamera 11a erfolgen. Es kann dann ein anschließendes Auslesen der Blatttemperaturdaten aus den Bilddaten erfolgen. Parallel hierzu kann ferner ein Erfassen 310 einer Umgebungstemperatur der Pflanze 31, ein Erfassen 320 einer Strahlungstemperatur der unmittelbaren Umgebung der Pflanze 31, ein Erfassen 330 einer Feuchttemperatur der Luft in unmittelbarer Umgebung der Pflanze 31 und ein Erfassen 340 einer Windgeschwindigkeit der Luft in unmittelbarer Umgebung der Pflanze 31 erfolgen, welche zusammen als klimatische Umgebungsparameter bezeichnet werden können. Basierend auf den erfassten Bilddaten LWIR der Wärmebildkamera 11a und den daraus abgeleiteten Blatttemperaturdaten sowie auf der erfassten Umgebungstemperatur, auf der erfassten Strahlungstemperatur der unmittelbaren Umgebung der Pflanze 31, auf der erfassten Feuchttemperatur und auf der erfassten Windgeschwindigkeit kann ein Bestimmen 350 des CWSI (Crop-Water-Stress-Index) der Pflanze 31 erfolgen. Dies kann eine Möglichkeit darstellen, den aktuellen Wasserstatus der Pflanze zu bestimmen.

Parallel kann ein Erfassen 400 von Bilddaten SWIR der Pflanze 31 mittels der Kurzwelleninfrarotkamera 11b erfolgen. Basierend auf den erfassten Bilddaten SWIR der Kurzwelleninfrarotkamera 11b kann ein Bestimmen 450 des WI (Water-Index) der Pflanze 31 erfolgen. Dies kann eine alternative Möglichkeit darstellen, den aktuellen Wasserstatus der Pflanze zu bestimmen.

Um Fehler in den beiden bestimmten Indices auszuschließen, kann nun ein Verifizieren 500 des Wasserstatus der Pflanze 31 basierend auf dem CWSI der Pflanze 31 und auf dem WI der Pflanze 31 erfolgen. Werden beide Indices als plausibel verifiziert, so kann ein Bestimmen 600 des Wasserstatus der Pflanze 31 basierend auf dem CWSI der Pflanze 31 und auf dem WI der Pflanze 31, beispielsweise durch eine logische UND-Verknüpfung, erfolgen.

Dieses verifizierte Messergebnis kann nun durch ein Zuordnen 700 des bestimmten Wasserstatus der Position der Pflanze 31 zugeordnet werden. Entsprechend kann ein Bewässern 800 der Pflanze 31 in Abhängigkeit ihres bestimmten Wasserstatus erfolgen. Parallel hierzu kann ein Ausgeben 900 des Wasserstatus der Pflanze 31 an einen Benutzer erfolgen.

### BEZUGSZEICHENLISTE (Teil der Beschreibung)

- LWIR: Bilddaten des langwelligen Infrarots (long-wave infra red)
- SWIR: Bilddaten des kurzwelligen Infrarots (short-wave infra red)
- VNIR: Bilddaten der visuellen Bilderfassung und des nahen Infrarots (visible and near infra red)

- V: drahtgebundene Datenübertragungen
- W: drahtlose Datenübertragungen

- 1: bewegliche Trägervorrichtung; multisensorales Positionierungssystem
- 1a: geführte Trägervorrichtung; schienengeführte Trägervorrichtung
- 1b: unbemanntes Fahrzeug, unbemanntes Luftfahrzeug; Drohne
- 10: Steuerungseinheit
- 11: optisches Sensorsystem
- 11a: Wärmebildkamera; LWIR-Kamera
- 11b: Kurzwelleninfrarotkamera; SWIR-Kamera
- 11c: Bild-/Nahinfrarotkamera; VNIR-Kamera
- 12: Laufschiene

- 2: Datenverarbeitungssystem
- 20: Steuerungseinheit; Server
- 21: Datenspeicher; Datenbank
- 22: mobile Endgeräte
- 22a: Tablet
- 22b: Smartphone
- 23: Wetterstation

- 3: Pflanzanlage
- 30: Boden
- 31: Pflanzen
- 32: Bewässerungsvorrichtung
- 33: Bewässerungsleitung
- 34: Gewächshaus

- 100: Positionieren der Wärmebildkamera 11a und/oder der Kurzwelleninfrarotkamera 11b, vorzugsweise und der Bild-/Nahinfrarotkamera 11c
- 150: Ausrichten der Wärmebildkamera 11a und/oder der Kurzwelleninfrarotkamera 11b, vorzugsweise und der Bild-/Nahinfrarotkamera 11c
- 200: Erfassen von Bilddaten VNIR der Pflanze 31
- 250: Erkennen der Pflanze 31 in erfassten Bilddaten VNIR
- 300: Erfassen von Bilddaten LWIR der Pflanze 31
- 310: Erfassen einer Umgebungstemperatur der Pflanze 31
- 320: Erfassen einer Strahlungstemperatur der unmittelbaren Umgebung der Pflanze 31
- 330: Erfassen einer Feuchttemperatur der Luft in unmittelbarer Umgebung der Pflanze 31
- 340: Erfassen einer Windgeschwindigkeit der Luft in unmittelbarer Umgebung der Pflanze 31
- 350: Bestimmen des CWSI (Crop-Water-Stress-Index) der Pflanze 31
- 400: Erfassen von Bilddaten SWIR der Pflanze 31
- 450: Bestimmen des WI (Water-Index) der Pflanze 31
- 500: Verifizieren des Wasserstatus der Pflanze 31 basierend auf CWSI und auf WI der Pflanze 31
- 600: Bestimmen des Wasserstatus der Pflanze 31
- 700: Zuordnen des bestimmten Wasserstatus zu Position der Pflanze 31
- 800: Bewässern der Pflanze 31 in Abhängigkeit ihres bestimmten Wasserstatus
- 900: Ausgeben des Wasserstatus der Pflanze 31

## Patentansprüche

1. Verfahren zur Wasserstatusbestimmung von Pflanzen (31) mit wenigstens den Schritten:
Erfassen (300) von Bilddaten (LWIR) wenigstens einer Pflanze (31) mittels einer Wärmebildkamera (11a),
Erfassen (310) einer Umgebungstemperatur der Pflanze (31) und
Bestimmen (350) des CWSI (Crop-Water-Stress-Index) der Pflanze (31) basierend auf den erfassten Bilddaten (LWIR) der Wärmebildkamera (11a) und auf der erfassten Umgebungstemperatur, und/oder
Erfassen (400) von Bilddaten (SWIR) wenigstens der Pflanze (31) mittels einer Kurzwelleninfrarotkamera (11b) und
Bestimmen (450) des WI (Water-Index) der Pflanze (31) basierend auf den erfassten Bilddaten (SWIR) der Kurzwelleninfrarotkamera (11b),
ferner Bestimmen (600) des Wasserstatus der Pflanze (31) basierend auf dem CWSI der Pflanze (31) und/oder auf dem WI der Pflanze (31).

2. Verfahren nach Anspruch 1, **gekennzeichnet durch** ferner den Schritt:
Erfassen (320) einer Strahlungstemperatur der unmittelbaren Umgebung der Pflanze (31),
wobei das Bestimmen (350) des CWSI (Crop-Water-Stress-Index) der Pflanze (31) ferner basierend auf der erfassten Strahlungstemperatur erfolgt.

3. Verfahren nach Anspruch 1 oder 2, **gekennzeichnet durch** ferner den Schritt:
Erfassen (330) einer Feuchttemperatur der Luft in unmittelbarer Umgebung der Pflanze (31),
wobei das Bestimmen (350) des CWSI (Crop-Water-Stress-Index) der Pflanze (31) ferner basierend auf der erfassten Feuchttemperatur erfolgt.

4. Verfahren nach einem der vorangehenden Ansprüche, **gekennzeichnet durch** ferner den Schritt:
Erfassen (340) einer Windgeschwindigkeit der Luft in unmittelbarer Umgebung der Pflanze (31),
wobei das Bestimmen (350) des CWSI (Crop-Water-Stress-Index) der Pflanze (31) ferner basierend auf der erfassten Windgeschwindigkeit erfolgt.

5. Verfahren nach einem der vorangehenden Ansprüche, **dadurch gekennzeichnet, dass**
ein Bestimmen (350) des CWSI der Pflanze (31) und ein Bestimmen (450) des WI der Pflanze (31) erfolgt, ferner mit dem Schritt:
Verifizieren (500) des Wasserstatus der Pflanze (31) basierend auf dem CWSI der Pflanze (31) und auf dem WI der Pflanze (31),
wobei das Bestimmen (600) des Wasserstatus der Pflanze (31) basierend auf dem CWSI der Pflanze (31) und auf dem WI der Pflanze (31) erfolgt.

6. Verfahren nach einem der vorangehenden Ansprüche, **gekennzeichnet durch** wenigstens die Schritte:
Erfassen (200) von Bilddaten (VNIR) wenigstens der Pflanze (31) mittels einer Bild-/Nahinfrarotkamera (11c) und
Erkennen (250) wenigstens der Pflanze (31), vorzugsweise basierend auf dem bestimmten NDVI (Normalized-Difference-Vegetation-Index) wenigstens der Pflanze (31), in den erfassten Bilddaten (VNIR) der Bild-/Nahinfrarotkamera (11c),
wobei das Erfassen (300) von Bilddaten (LWIR) wenigstens der Pflanze (31) mittels der Wärmebildkamera (11a) und/oder das Erfassen (400) von Bilddaten (SWIR) wenigstens der Pflanze (31) mittels der Kurzwelleninfrarotkamera (11b) für die erkannte Pflanze (31) der Bilddaten (VNIR) der Bild-/Nahinfrarotkamera (11c) erfolgt.

7. Verfahren nach einem der vorangehenden Ansprüche, **gekennzeichnet durch** wenigstens den Schritt:
Bewässern (800) wenigstens der Pflanze (31) in Abhängigkeit ihres bestimmten Wasserstatus.

8. Verfahren nach einem der vorangehenden Ansprüche, **gekennzeichnet durch** wenigstens den Schritt:
Positionieren (100) der Wärmebildkamera (11a) und/oder der Kurzwelleninfrarotkamera (11b), vorzugsweise und der Bild-/Nahinfrarotkamera (11c), zum Erfassen (200, 300, 400) der Bilddaten (VNIR, LWIR, SWIR) wenigstens der Pflanze (31), und
Zuordnen (700) des bestimmten Wasserstatus zu der Position der Pflanze (31).

9. Verfahren nach einem der vorangehenden Ansprüche, **gekennzeichnet durch** wenigstens den Schritt:
Ausgeben (900) des Wasserstatus wenigstens der Pflanze (31), vorzugsweise an einen Benutzer.

10. System zur Durchführung eines Verfahrens nach einem der vorangehenden Ansprüche,
mit einem optischen Sensorsystem (11)
mit wenigstens einer Wärmebildkamera (11a), welche ausgebildet ist, Bilddaten (LWIR) wenigstens einer Pflanze (31) zu erfassen, und/oder
mit einer Kurzwelleninfrarotkamera (11b), welche ausgebildet ist, Bilddaten (SWIR) wenigstens der Pflanze (31) zu erfassen,
vorzugsweise ferner mit einer Bild-/Nahinfrarotkamera (11c), welche ausgebildet ist, Bilddaten (VNIR) wenigstens der Pflanze (31) zu erfassen,
mit einem Datenverarbeitungssystem (2), welches ausgebildet ist, eine Umgebungstemperatur der Pflanze (31), vorzugsweise ferner eine Strahlungstemperatur der unmittelbaren Umgebung der Pflanze (31), eine Feuchttemperatur der Luft in unmittelbarer Umgebung der Pflanze (31) und/oder eine Windgeschwindigkeit der Luft in unmittelbarer Umgebung der Pflanze (31), zu erfassen, und
mit einer Steuerungseinheit (10, 20), welche ausgebildet ist,
den CWSI (Crop-Water-Stress-Index) der Pflanze (31) basierend auf den erfassten Bilddaten (LWIR) der Wärmebildkamera (11a) und auf der erfassten Umgebungstemperatur zu bestimmen, und/oder
den WI (Water-Index) der Pflanze (31) basierend auf den erfassten Bilddaten (SWIR) der Kurzwelleninfrarotkamera (11b) zu bestimmen, und
ferner den Wasserstatus der Pflanze (31) basierend auf dem CWSI der Pflanze (31) und/oder auf dem WI der Pflanze (31) zu bestimmen.

11. System nach Anspruch 10, **gekennzeichnet durch**
eine bewegliche Trägervorrichtung (1), welche das optische Sensorsystem (11) aufweist und ausgebildet ist, sich gegenüber der Pflanze (31) zu positionieren.

12. System nach Anspruch 11, **dadurch gekennzeichnet, dass**
die bewegliche Trägervorrichtung (1) als geführte Trägervorrichtung (1a), vorzugsweise als schienengeführte Trägervorrichtung (1a), ausgebildet ist.

13. System nach Anspruch 11, **dadurch gekennzeichnet, dass**
die bewegliche Trägervorrichtung (1) als unbemanntes Fahrzeug (1b), vorzugsweise als unbemanntes Luftfahrzeug (1b), ausgebildet ist.
